# EUROPEAN PATENT SPECIFICATION

(11) **EP 4 196 342 B1**
(45) Date of publication and mention of the grant of the patent: **23.10.2024**
(21) Application number: 21766519.9
(22) Date of filing: 11.08.2021
(51) Int. Cl.: B29D 30/10, B29D 30/24, B29D 30/26

(54) **PROCESS AND APPARATUS FOR BUILDING TYRES**
VERFAHREN UND VORRICHTUNG ZUR HERSTELLUNG VON REIFEN
PROCÉDÉ ET APPAREIL DE CONSTRUCTION DE PNEUS

(30) Priority: 12.08.2020 IT 202000020023
(43) Date of publication of application: 21.06.2023
(73) Proprietor: Pirelli Tyre S.p.A., 20126 Milano (IT)
(72) Inventor: DE COL, Christian, 20126 Milano (IT); MARIANI, Mario, 20126 Milano (IT); TROMBIN, Andrea, 20126 Milano (IT)
(74) Representative: Tansini, Elio Fabrizio
(86) International application number: PCT/IB2021/057393
(87) International publication number: WO 2022/034511

(56) References cited:
- WO-A1-2009/058296
- CN-A- 102 126 297
- US-A- 3 366 526

## Description

The present invention relates to a process and an apparatus for building tyres for vehicle wheels.

More particularly, the invention is intended for building green tyres, to be subsequently subjected to a vulcanisation cycle for obtaining the final product.

A tyre for vehicle wheels generally comprises a carcass structure comprising at least one carcass ply having respectively opposite ends engaged with respective anchoring annular structures, integrated in the zones normally identified with the name "beads", having an internal diameter substantially corresponding to a so-called "fitting diameter" of the tyre on a respective mounting rim.

The carcass structure is associated with a crown structure which can comprise one or more belt layers, situated in radial superimposition with respect to each other and with respect to the carcass ply, having textile or metallic reinforcement cords with cross orientation and/or substantially parallel to the circumferential extension direction of the tyre (at 0 degrees). In radially outer position with respect to the belt layers, a tread band is applied, also made of elastomeric material like other semifinished products constituting the tyre.

Respective sidewalls made of elastomeric material are applied in axially outer position on the lateral surfaces of the carcass structure, each extended from one of the lateral edges of the tread band up to the respective anchoring annular structure to the beads. In the tyres of "tubeless" type, an air impermeable covering layer, usually termed "liner", covers the internal surfaces of the tyre.

Following the building of the green tyre actuated by assembly of respective components, a treatment of moulding and vulcanisation is generally executed aimed to determine the structural stabilisation of the tyre by cross-linking the elastomeric compositions as well as to impart on the same, if requested, a desired tread design and possible distinctive graphic marks at the sidewalls of the tyre.

With the term "elastomeric material" it is intended to indicate a composition comprising at least one elastomeric polymer and at least one reinforcement filler. Preferably, such composition also comprises additives such as, for example, a cross-linking agent and/or a plasticising agent. Due to the presence of the cross-linking agent, by heating such material it can be cross-linked, so as to form the final manufactured product.

By "tyre for two-wheel vehicles", in particular motorcycles, it is intended a tyre whose curvature ratio is approximately comprised between about 0.15 and about 0.45.

By "curvature ratio" relative to a tyre (or to a portion thereof) it is intended the ratio between the distance of the radially outer point of the tread band (or of the external surface) of the line passing through the laterally opposite ends of the tread itself (or of the external surface itself), measured on a radial plane of the tyre (or of said portion thereof), and the distance measured along the chord of the tyre (or of a portion thereof) between said ends.

By "curvature ratio" relative to a forming drum it is intended the ratio between the distance of the radially outer point of the external surface of the drum from the line passing through the laterally opposite ends of the drum itself, measured on a radial plane of the drum, and the distance measured along the chord of the drum between said ends. The terms "radial" and "axial" and the expressions "radially inner/outer" and "axially inner/outer" are used with reference to the radial direction of the forming drum used / of the tyre (i.e. to a direction perpendicular to the rotation axis of the aforesaid forming drum / tyre) and to the axial direction of the forming support used / of the tyre (i.e. to a direction parallel to the rotation axis of the aforesaid forming drum / tyre). The terms "circumferential" and "circumferentially" are instead used with reference to the annular extension of the aforesaid forming support / tyre.

A plane with respect to a forming drum or to a tyre is defined "radial" when it contains the rotation axis of the forming drum or of the tyre, respectively.

By "elementary semifinished product" it is intended a continuous elongated element made of elastomeric material. Preferably such continuous elongated element can comprise one or more textile and/or metallic and/or hybrid cords. Preferably such continuous elongated element can be cut to size.

By "component" or "structural component" of a tyre it is intended any one portion thereof capable of carrying out its own function, or a part thereof. Components of the tyre include for example the liner, the under-liner, the sidewall inserts, the bead cores, the filler inserts, the anti-abrasive elements, the sidewalls, the carcass ply/plies, the belt layer/layers, the tread band, the under-layer of the tread band, the under-belt inserts etc., or a part thereof.

The carcass structure, generally in sleeve form, and the crown structure are generally made separately from each other in respective work stations, in order to be mutually assembled together at a later time.

Toroidal forming drums provided with inserts which forms axially external annular rings are known, for example, by US 3 366 526 A and CN 102126 297 A.

The document WO 2015/097636A1 in the name of the same Applicant, describes a toroidal forming drum which is expanded within a shaped carcass sleeve, in order to support the carcass sleeve against an abutment surface present outside the forming drum. An elementary semifinished product is applied around the shaped carcass sleeve, pressing said elementary semifinished product towards the abutment surface. The abutment surface has circumferential rows of solid portions alternated with empty portions. The solid portions, arranged along axially opposite circumferential edges of the abutment surface, have a transverse size comprised between 10% and 60% of a transverse size presented by the solid portions arranged in proximity to an axial middle line plane of the abutment surface.

The document WO 2016/157001A1 in the name of the same Applicant, describes a forming drum comprising consecutive sectors that are radially movable between a contracted condition and an expanded condition in which the sectors are radially moved away from a geometric axis in order to define a radially outer abutment surface. Each sector has circumferentially opposite coupling portions, each comprising circumferential projections alternated with circumferential cavities. The projections of each sector are slidably engaged in the respective cavities of circumferentially adjacent sectors. From at least one of the projections, at least one support wing extends which has a first side and a second side, respectively opposite. The first side coincides with a portion of the abutment surface and the second side at least partially surmounts one of the projections that belong to an adjacent sector.

According to the Applicant the aforesaid production systems of the type illustrated in the documents WO 2015/097636A1 and WO 2016/157001A1, in which the crown structure is directly made on the carcass structure while the latter is supported by a forming drum, also usable for the purpose of attaining the carcass structure, or internally couplable to the previously-formed carcass structure, allow improving the quality of the product.

The Applicant has nevertheless observed that the aforesaid forming drums are not well adapted for sustaining mechanical stresses of relatively high value. For example, in the production processes which provide for making the carcass structure directly on the forming drum, the application of the anchoring annular structures and/or of other components involves the transmission of relatively high axial thrusts against the axially opposite edges of the forming drum. The presence of surface discontinuities in these zones tends to determine the onset of high localized pressures, with consequent risks of early wear and/or breakage.

The Applicant has also observed that if the production requirements require frequent changes of the geometric and structural characteristics of the tyres under production, the need to arrange and manage a high quantity of forming drums, each adapted for a specific tyre size to be attained, involves difficulties both regarding logistics for managing the necessary storage spaces for housing the drums, and costs due to the high investments required for making the single drums.

The Applicant has perceived that by generating substantially continuous abutment surfaces on the axially more external portions of the forming drum, by respective auxiliary elements removably engaged with the sectors, it is possible to simplify the application of the components of the tyre being processed and at the same time obtain an easy geometric and size adaptability of the drum itself.

More particularly, the Applicant has finally found that by arranging axially opposite auxiliary elements or inserts in proximity to the axially opposite edges of each sector of the drum, it is possible to form elements having substantially continuous annular surfaces extending along the axially opposite edges of the forming drum, simplifying the deposition of the components of the tyre being processed on the drum itself and increasing the structural strength of the latter with respect to stresses induced during processing. The geometric and size characteristics of the inserts can also be advantageously selected depending on the requirements, so as to limit or eliminate the risk of formation of undesired air sacks between the various components deposited on the drum.

In accordance with one aspect, the invention relates to a process for building tyres according to independent claim 1.

In accordance with a further aspect, the invention relates to an apparatus for building tyres for vehicle according to independent claim 7.

The Applicant deems that the presence of annular elements, i.e. elements having an annular surface with substantially continuous extension, can facilitate the application of the structural components in proximity to the axially opposite edges of the forming drum. In particular, the annular elements defined by the inserts in the operative position are adapted to effectively sustaining stresses, even considerable ones, preserving the structural integrity of the forming drum during the application of high axial thrusts required for the purpose of the application of specific components, such as for example the annular reinforcement structures. In addition, the Applicant deems that the possibility of contraction and expansion of the forming drum is not compromised if each of the annular elements is composed of a plurality of inserts, each oscillatably constrained to one of the sectors. The presence of the annular elements formed by movable inserts also allows an easy adaptation of the drum for processing tyres which are structurally and/or geometrically different from each other. The inserts are in fact adapted to be easily substituted with inserts of different size or geometry, in order to modify the shaping of the drum as a function of the production requirements. The making of the inserts for obtaining annular elements of different shapes and sizes requires considerably lower times and costs with respect to those required for making the entire drum, and also the storage spaces for the dismounted inserts are drastically reduced.

In at least one of the aforesaid aspects, the invention comprises one or more of the following preferred characteristics which are described hereinbelow.

Preferably, said inserts form a first series of inserts, in which after the removal of the first tyre being processed, the first series of inserts is removed from the sectors of the forming drum and substituted with inserts belong to a second series and having size different from the inserts of the first series, before applying, on the deposition surface of the forming drum, at least one component of a second tyre being processed.

The availability of different series of inserts allows an easy adaptation of the geometric and size characteristics of the forming drum as a function of the production requirements, facilitating the production flexibility also in the production of batches of different tyres.

Preferably, said inserts are brought to the operative position starting from a rest position in which they extend each transverse to a circumferential direction that is concentric with respect to the geometric axis of the forming drum.

The orientation of the inserts according to directions transverse to the circumferential direction allows the diameter contraction of the forming drum in the absence of mechanical interferences or jamming between circumferentially contiguous inserts.

Preferably, in the operative position, the inserts each arranged along axially opposite edges of the forming drum extend, one on the continuation of the other, along a circumferential direction that is concentric with respect to the geometric axis of the forming drum.

The surface continuity of the annular elements formed by the inserts in the operative position is therefore facilitated.

Preferably, in the operative position, respective circumferentially opposite terminal walls of each insert are mated each with one of the terminal walls of a circumferentially adjacent insert.

Preferably, each insert rotates around a rotation axis axially extending through a lying plane of the respective axial end edge of the central body.

According to the Applicant, the rotatable connection represents an optimal solution, structurally simple and functionally reliable, in order to facilitate the movement of the inserts between the rest position and the operative position.

Preferably, each insert is elastically thrust towards the operative position.

The structure of the forming drum is therefore simplified, rendering the use of levers or other drive systems not necessary for causing the movement of the inserts towards the operative position.

Preferably, during the contraction of the forming drum, each insert is thrust towards the rest position upon action of a projection belonging to an adjacent sector, acting against a cam portion carried by the insert itself.

Preferably, said at least one component is applied by an axial thrust action against the axially opposite edges of the forming drum. Preferably, each insert has an axially inner wall acting axially in abutment relationship against the central body in order to oppose the axial thrust action transmitted to the forming drum during the application of the component.

Preferably, provision is also made for the action of radially contracting the forming drum after the application of said at least one component, and removing the first tyre being processed from the forming drum. Preferably, said radially outer deposition surface is substantially continuous.

Preferably, each sector has a central body carrying circumferentially opposite coupling portions.

Preferably, the coupling portions each comprise circumferential projections alternated with circumferential cavities.

Preferably, the projections of each sector are slidably engaged in the respective cavities of circumferentially adjacent sectors.

Preferably, the central body of each sector is axially delimited between two opposite axial end edges.

Preferably, said axial end edges are mutually spaced to an extent smaller than the overall axial size of the deposition surface.

Preferably, said axial end edges are each spaced from one of the axially opposite edges of the forming drum.

Preferably, multiple series of inserts are provided that have respectively different sizes, each series of inserts being separately and selectively engageable with the central bodies of the sectors in order to confer a predetermined geometric shaping to the forming drum. Preferably, said annular elements define axially outer portions of the deposition surface.

The application of semifinished products and/or components is therefore simplified since, due to the annular elements, the surface discontinuities can be eliminated or considerably reduced, such discontinuities typically due to the alternation of projections and cavities which, especially in the axially outer zones of the drum, tend to obstruct a correct application of the semifinished products.

Preferably, said inserts are movable towards the operative position starting from a rest position in which they extend each transverse to a circumferential direction that is concentric with respect to the geometric axis of the forming drum.

Preferably, each insert has an elongated curvilinear shaping in a substantially circumferential direction.

Preferably, in the operative position, each insert extends along a circumferential direction that is concentric with said geometric axis. Preferably, in the operative position, the inserts each arranged along the axially opposite edges of the forming drum extend, one on the continuation of the other, along a circumferential direction that is concentric with respect to the geometric axis of the forming drum. Preferably, each insert is rotatably engaged with the central body by a pin axially extending through the respective axial end edge of the central body.

Preferably, each insert is removably connected to the pin by a fixing screw coaxially engaged with the pin itself.

Each of the inserts is therefore adapted to be easily substituted by simple removal of the fixing screw.

Preferably, each insert is elastically thrust towards the operative position by at least one spring operating between the central body of the respective sector and the insert itself.

Preferably, the spring has one end constrained to an arm radially projecting from the pin.

The return springs and the pins can therefore remain constrained to the respective sectors during the removal of the inserts, simplifying the substitution thereof without it being necessary to provide for the dismounting and remounting of the pins and springs.

Preferably, the arm is situated in a position radially inside one of said coupling portions next to one of the projections.

Preferably, each insert has an axially inner wall directed towards the central body of the respective sector.

Preferably, said axially inner wall is substantially flat.

Preferably, said axially inner wall acts in abutment relationship against an abutment surface carried by the central body of the respective sector at the respective axial end edge.

Preferably, said abutment surface is substantially flat.

Preferably, the axially inner wall of the insert and the abutment surface slidably mate in a plane orthogonal to the geometric axis of the forming drum.

Wide surface of mutual contact between the inserts and the sectors are thus attained, increasing the structural strength of the assembly even in relation to the stresses induced during processing, for example during the approaching of the anchoring annular structures to the forming drum and/or the turning up of the ply/plies for the purpose of building the carcass structure.

Preferably, each insert has a curved longitudinal extension between at least two terminal walls that are circumferentially opposite each other. Preferably, in the operative position, the terminal walls of each insert are each approached with one of the terminal walls of a circumferentially adjacent insert.

Preferably, in the operative position, the terminal walls of each insert mate each with one of the terminal walls of a circumferentially adjacent insert.

Preferably, at least in the operative position, the terminal walls of each insert are each parallel to one of the terminal walls of a circumferentially adjacent insert.

Preferably, said terminal walls are arranged according to an extension that is tilted with respect to a radial direction at the geometric axis of the forming drum.

Preferably, in the operative position, the terminal walls form an angle approximately comprised between 15° and 60° with respect to a radial direction at the geometric axis of the forming drum.

Preferably, in the operative position, the terminal walls form an angle approximately comprised between 15° and 30° with respect to a radial direction at the geometric axis of the forming drum.

Preferably, each insert has a cam portion made in the shape of a lateral projection arranged in proximity to one of the circumferentially opposite terminal walls of the insert itself.

Preferably, each insert has a cam portion having a shaping complementary to a space existing between axially outer projections belonging to two circumferentially adjacent sectors.

A greater continuity is thus conferred to the deposition surface of the forming drum, especially in the zones close to the axial end edges of the central body.

Preferably, each insert has a cam portion configured for interacting against the central body of one of the circumferentially adjacent sectors.

The synchronised movement of the inserts towards the rest position is therefore obtained following the contraction of the drum, without requiring the use of levers and/or other additional drive systems. Preferably, said cam portion is made in the shape of a lateral projection arranged in proximity to one of the circumferentially opposite terminal walls of the insert, in order to interact against one of the projections carried by the sector circumferentially adjacent to that carrying the insert itself.

Preferably, at least in the operative position, the cam portion of each insert is approached to a radially inner surface of one of the axially outer projections belonging to the central body of the sector adjacent to that carrying the insert itself.

When the drum is contracted starting from the expanded condition, the action of the projections on the cam portions of the inserts assists the rotation thereof around the respective pins, opposing the action of the springs.

The driving of the synchronised movement of the inserts is therefore effectively attained due to the action of contraction and expansion of the forming drum, without requiring the use of levers and/or other additional drive systems.

Further characteristics and advantages will be clearer from the detailed description of a preferred but not exclusive embodiment of a process and an apparatus for building tyres for vehicle wheels, in accordance with the present invention.

Such description will be set forth hereinbelow with reference to the enclosed drawings, provided only as a non-limiting example, in which:
figure 1 schematically shows a top view of an apparatus for building tyres;
figure 2 shows an interrupted perspective view of a forming drum according to the present invention, in radially contract condition;
figure 3 shows an interrupted perspective view of the drum of figure 2 in radially expanded condition;
figure 4 shows the drum of figure 3 in interrupted front view;
figure 5 shows an interrupted perspective view of an enlarged detail of figure 2 showing two circumferentially adjacent sectors;
figure 6 shows a perspective view of an enlarged detail of figure 3, showing two circumferentially adjacent sectors;
figure 7 shows one of the sectors of the drum of figure 6 in perspective view from a different angle and partially interrupted;
figure 8 shows the drum of figure 3 in interrupted radial section;
figure 9 shows, in interrupted radial section, the forming drum equipped with inserts belong to a second series, geometrically different from a first series of inserts depicted in figures 2 to 7;
figure 10 schematically shows a radial half-section of a tyre attainable in accordance with the present invention.

With reference to the abovementioned figures, reference number 1 overall indicates an apparatus for building tyres for vehicle wheels. The apparatus 1 is arranged to actuate a building process in accordance with the present invention.

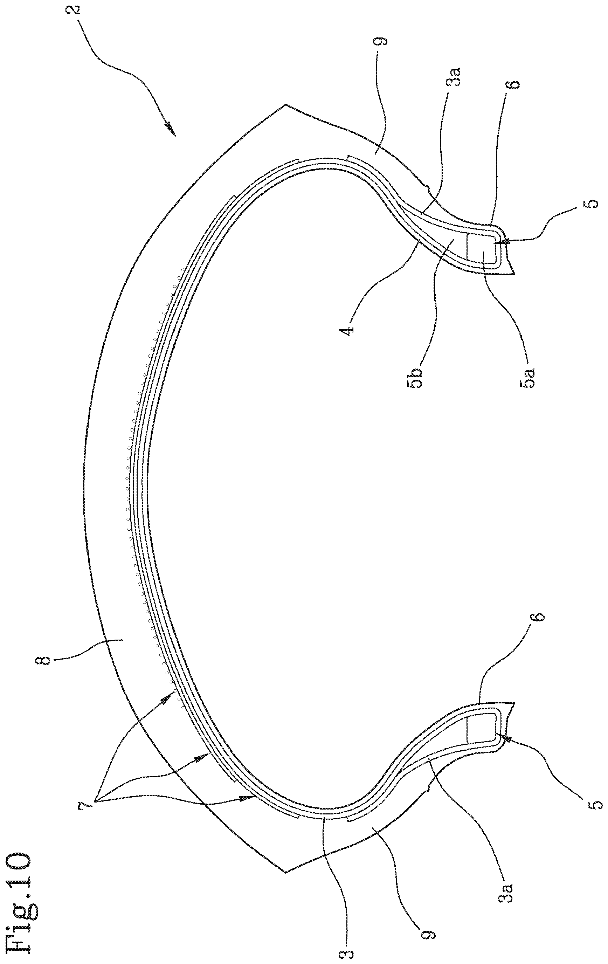

The apparatus 1 is set for attaining tyres 2 (figure 10) essentially comprising at least one carcass ply 3 preferably internally covered by a layer of impermeable elastomeric material or so-called liner 4. Two anchoring annular structures 5, each comprising a so-called bead core 5a preferably carrying an elastomeric filler 5b in radially outer position, are engaged with respective end flaps 3a of the carcass ply/plies 3. The anchoring annular structures 5 are integrated in proximity to zones normally identified with the name of "beads" 6, at which the engagement between the tyre 2 and a respective mounting rim (not depicted) usually occurs.

A belt structure 7 is circumferentially applied around the carcass ply/plies 3, and a tread band 8 is circumferentially superimposed on the belt structure 7. Two sidewalls 9, each extended from the corresponding bead 6 to a corresponding lateral edge of the tread band 8, are applied in laterally opposite positions on the carcass ply/plies 3.

The apparatus 1 comprises a carcass building line 10 having one or more building stations 11 where, e.g. according to known manners, the making of a carcass sleeve 12 having substantially cylindrical shaping is executed. The carcass building line 10 leads to a shaping station 13 in which the carcass sleeve 12 is shaped according to a toroidal configuration, for example as described in the abovementioned document WO 2016/157001A1.

The carcass sleeve 12 comprises said at least one carcass ply 3, preferably internally covered by the liner 4. If necessary, the carcass sleeve 12 can also comprise the sidewalls 9 or first portions thereof, each extended starting from a respective bead 6.

In the shaping station 13, a substantially rigid and expandable toroidal forming drum 14 is preferably removably engaged.

Application devices 15 operate in proximity to the shaping station 13 for applying the previously-obtained carcass sleeve 12, and/or other components of the tyre 2 being processed, on a deposition surface S presented outside the forming drum 14. For example, the same carcass sleeve 12 can be directly made on the forming drum 14 by applying the single components thereof (liner, carcass ply/plies, bead cores etc.) on the deposition surface S.

The association of the anchoring annular structures 5 with the carcass structure 3 can be executed at the carcass building line 10, as is for example provided in the document WO 2016/157001A1. In a possible embodiment variant, the association of the anchoring annular structures 5 with the carcass structure 3 can be executed at the shaping station 13, after the carcass sleeve 12 lacking anchoring annular structures has been arranged on the forming drum 14.

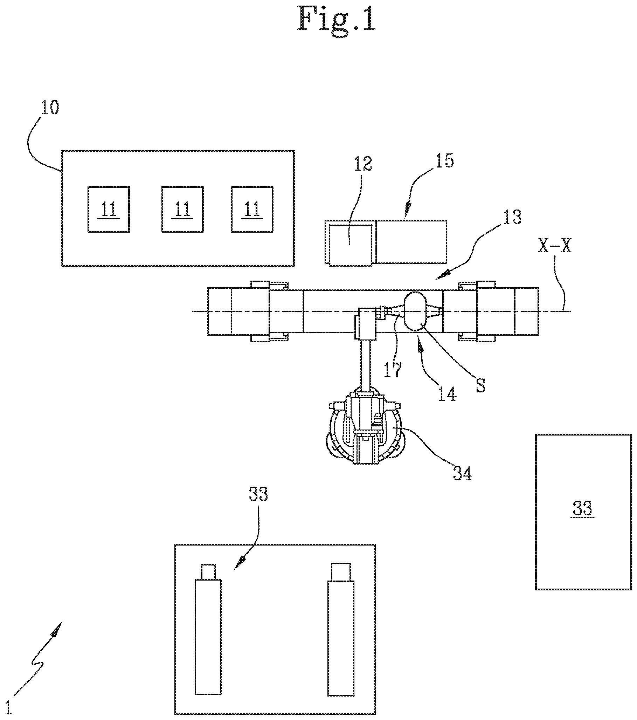

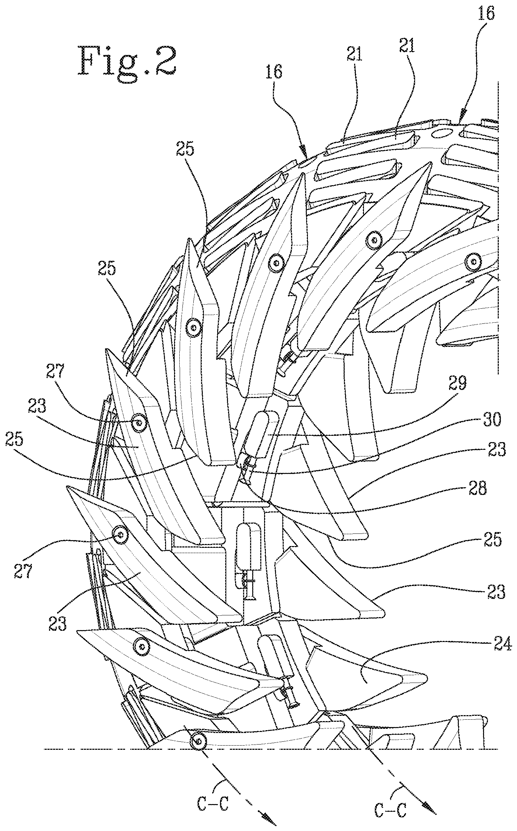

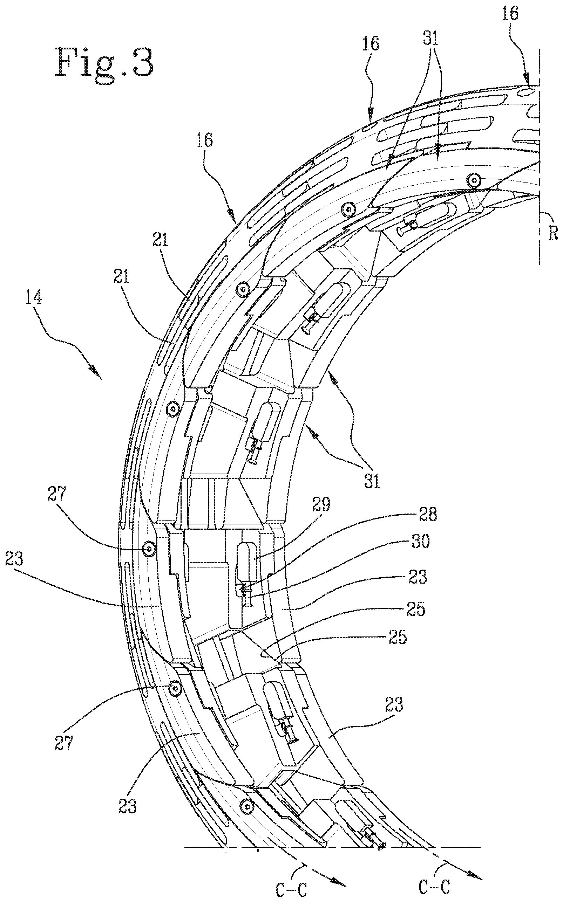

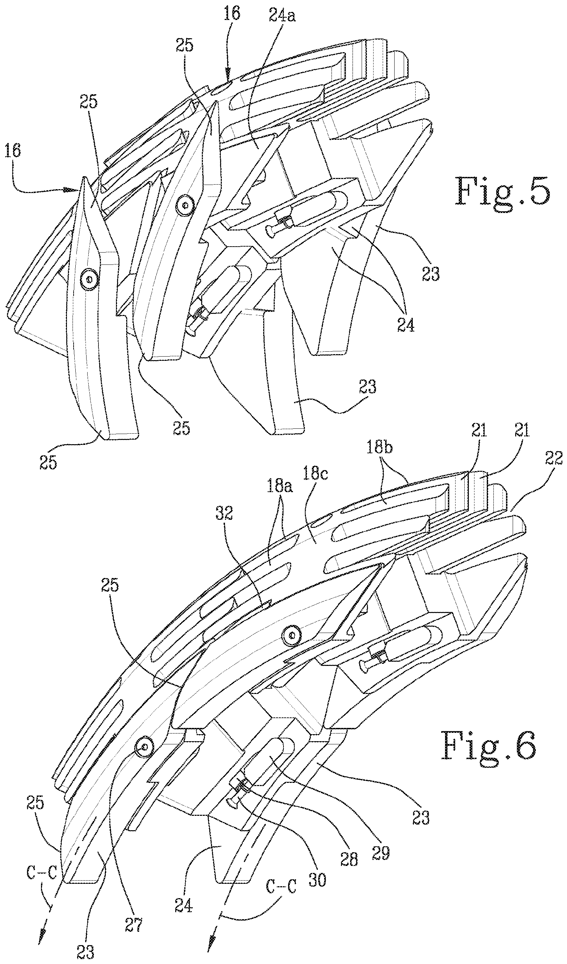

The forming drum 14 can be removably engaged with the same shaping station 13 with the aid of at least one robotic arm 34, which is also adapted for its transfer to possible additional work stations 33. The forming drum 14 is expandable between a radially contract condition (figures 2 and 5), and a radially expanded condition (figures 3, 4, 6, 7, 8 and 9). For such purpose, the forming drum 14 comprises a plurality of sectors 16 circumferentially distributed around a central shaft 17 (figure 1) coaxial with a geometric rotation axis X-X of the drum itself.

The sectors 16 are movable upon action of radial movement devices, preferably simultaneously with respect to each other, from the aforesaid contracted condition in which they are radially approached to the central shaft 17, to the expanded condition in which said sectors 16 are radially moved away from the central shaft 17, i.e. from the geometric axis X-X. The radial movement devices are not illustrated in detail since they can be attained in any known manner, for example as indicated in WO 2016-157001 or in WO 2014-083477.

In the expanded condition, the assembly of the sectors 16 of the forming drum 14 defines, along the circumferential extension thereof, the deposition surface S. The deposition surface S is toroidally shaped according to the internal configuration which at least one part of the carcass sleeve 12 must take on upon completed shaping. More in detail, it can be preferably provided that the deposition surface S of the forming drum 14 in the expanded condition has a curvature ratio comprised between about 0.15 and about 0.45, typically adapted for making tyres for motorcycles or other two-wheel vehicles. If necessary, curvature ratios can nevertheless be employed with values lower than those indicated above, for example suitable for the production of car or truck tyres.

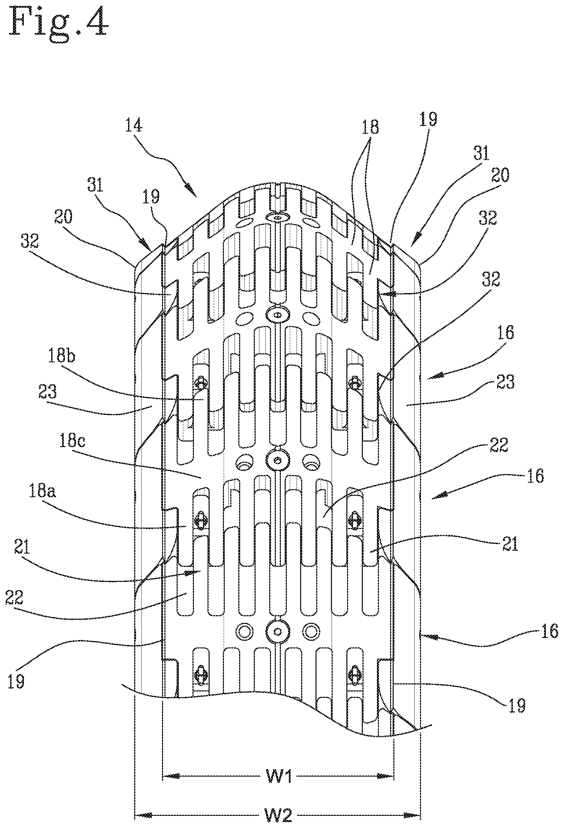

As is better illustrated in figures 4 to 7, each of the sectors 16 has a central body 18, axially delimited between two opposite axial end edges 19, mutually spaced to an extent W1 smaller than the overall axial size W2 of the deposition surface S. Preferably, the axial end edges 19 of the central body 18 are each spaced by one of the axially opposite edges 20 of the forming drum 14.

The central body 18 of each sector 16 carries a first coupling portion 18a and a second coupling portion 18b, circumferentially opposite and preferably interconnected by an intermediate portion 18c which has, at least on the deposition surface S, a main extension direction parallel to a radial plane of the forming drum 14. Each of the coupling portions 18a, 18b has a plurality of elongated projections 21 extended in a circumferential direction from the intermediate portion 18c, alternated with respective circumferentially elongated cavities 22.

In a same sector 16, the projections 21 belonging to one of the coupling portions, for example the first coupling portion 18a, are offset with respect to the projections 21 of the other coupling portion 18b. The axially more external projections 21 of one of the coupling portions, for example of the first coupling portion 18a, define the axial end edges 19 of the central body 18 of the respective sector 16. The projections 21 of each sector 16 are slidably engaged in the respective cavities 22 of the circumferentially adjacent sectors 16, and are adapted to slide in the cavities themselves in order to support the expansion and contraction movements of the forming drum 14.

In the contracted condition, the projections 21 of each sector 16 penetrate into the respective cavities 22 up to touching or nearly touching the intermediate portion 18c of the adjacent sector 16 (figures 2 and 5). More particularly, in the contracted condition the projections 21 are inserted in the respective cavities 22 to an extent at least equal to 80% of their length.

In the expanded condition, the projections 21 are extracted from the cavities 22 to an extent at least equal to 80% of their length, as is better visible in figures 3, 4 and 6.

Coupled with the central body 18 of each sector 16 is a pair of interchangeable inserts 23, each removably engaged at one of the axial end edges 19 of the central body 18 itself.

Each insert 23 has an axially inner wall 24 directed towards the central body 18 of the respective sector 16. The axially inner wall 24, preferably flat, acts in axial abutment relationship against an abutment surface 24a, also preferably flat, carried by the central body 18 of the respective sector 16 at the respective axial end edge 19. The axially inner wall 24 of the insert 23 and the abutment surface 24a slidably mate in a plane orthogonal to the geometric axis X-X of the forming drum 14.

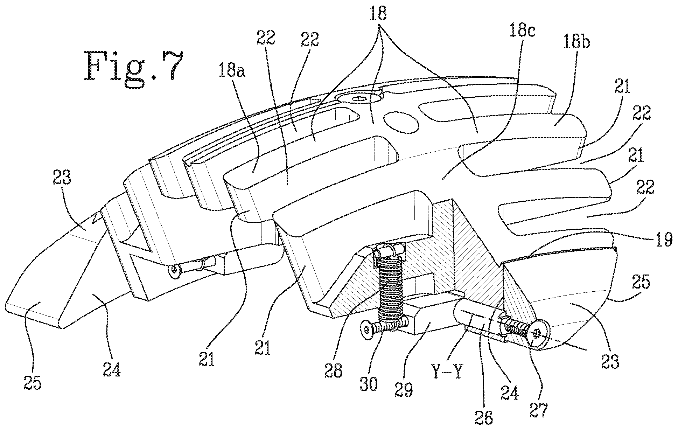

Each insert 23 extends preferably according to a curved longitudinal extension between at least two circumferentially opposite terminal walls 25. More particularly, the insert 23 has an elongated curvilinear shaping in a substantially circumferential direction. The insert 23 is rotatably engaged with the central body 18 by a pin 26 around a respective rotation axis Y-Y arranged perpendicular to the axially inner wall 24 and axially extending through a lying plane containing the respective axial end edge 19 of the central body itself. Preferably, as is better visible in figure 7, the pin 26 is rotatably engaged through one of the axially more external projections 21 of the first coupling portion 18a, which define the axial end edges 19 of the respective central body 18. A fixing screw 27 can be engaged through the insert 23 and engaged via screwing coaxially in the pin 26, in order to fix the latter to the insert 23 itself, against its axially inner wall 24 directed towards the central body 18.

Preferably, each insert 23 is operatively associated with at least one spring 28, e.g. a helical traction spring, operating between the insert itself and the central body 18 of the respective sector 16. The spring 28 has a first end constrained to the central body 18, and a second end operating on an arm 29 radially projecting from the pin 26 of the respective insert 23. More particularly, the arm 29 is preferably situated in radially inner position with respect to the central body 18, more precisely at the first coupling portion 18a next to one of the axially more external projections 21, on the side of the latter opposite the axial end edge 19 of the central body 18. In the illustrated example, the arm 29 carries a terminal screw 30 projecting on the continuation of the arm 29 itself in order to engage the second end of the spring 28.

Each insert 23 is movable around the rotation axis Y-Y of the respective pin 26, preferably together with the latter, between a rest position in which it extends transverse to a circumferential direction C-C (figure 2) that is concentric with respect to the geometric axis X-X of the forming drum 14, and an operative position in which it extends along such circumferential direction C-C (figure 3).

The operative position of the inserts 23 corresponds with the expanded condition of the forming drum 14. As is visible from figure 3 and 4, in this situation the inserts 23 constrained to the respectively opposite axial end edges 19 of each sector 16 each extend on the continuation of the inserts 23 belonging to the circumferentially adjacent sectors 16. The inserts 23, each arranged along axially opposite edges 20 of the forming drum 14, extend one on the continuation of the other along the circumferential direction C-C that is concentric with respect to the geometric axis X-X. More particularly, each insert 23 can have the respective terminal walls 25 approached, preferably mating and parallel, each with one of the terminal walls 25 of the circumferentially adjacent insert 23, in favour of the surface continuity of the assembly. The terminal walls 25 of each insert 23 can be arranged each according to an extension that is tilted with respect to a radial direction R at the geometric axis X-X of the forming drum 14 and incident with the terminal wall itself. Preferably, in the operative position each of the terminal walls 25 forms an angle approximately comprised between 15° and 60°, more preferably between 15° and 30°, with respect to the radial direction R at the geometric axis X-X incident with the terminal wall itself.

In the operative position, the assembly of the inserts 23 forms two substantially continuous annular elements 31, each extended along one of the axially opposite edges 20 of the forming drum 14. Such annular elements 31 define axially outer portions of the deposition surface S, positioned so as to provide an abutment for the carcass sleeve 12 of the tyre 2 being processed, approximately in the zones of the beads 6.

Following the contraction of the forming drum 14 starting from the expanded condition, a mutual approaching is caused of the sectors 16 in the circumferential direction C-C, with a progressive sliding of the projections 21 towards the interior of the respective cavities 22. During the contraction of the forming drum 14 towards the contracted condition, the terminal walls 25 of the inserts 23 are adapted to slidably interact against each other, so as to facilitate a progressive rotation of the inserts themselves towards the rest position, opposing the action of the springs 28 which tend to elastically bring the inserts 23 back, each towards the respective operative position.

In addition or as an alternative to the interaction between the terminal walls 25, each insert 23 can have a cam portion 32, preferably made in the form of a lateral projection arranged in proximity to one of the circumferentially opposite terminal walls 25 of the insert 23. The cam portion 32 can have a shaping complementary to a space existing between the axially outer projections 21 belonging to two circumferentially adjacent sectors 16, so as to confer greater continuity to the deposition surface S in the zones close to the axial end edges 19 of the central body 18.

Each cam portion 32 can be arranged to interact against the central body 18 of the sector 16 circumferentially adjacent to that carrying the insert 23 itself, in order to facilitate the movement of the insert itself towards the rest position up to reaching the contracted condition of the forming drum 14. For example, the cam portion 32 can interact against one of the projections 21 carried by the circumferentially adjacent sector 16. More particularly, at least in the operative position, the cam portion 32 of each insert 23 is approached, preferably in abutment relationship, to a radially inner surface of one of the axially more external projections 21 belonging to the central body 18 of the sector 16 adjacent to that carrying the insert itself. When the forming drum 14 is contracted starting from the expanded condition, the action of the projections 21 on the cam portions 32 assists the rotation thereof around the rotation axes Y-Y defined by the respective pins 26, opposing the action of the springs 28, up to carrying them into the rest position upon reaching the contracted condition of the forming drum 14.

For the purpose of building a tyre 2, the forming drum 14 that was previously contracted, for example in order to allow the removal thereof from a previously-build tyre, is radially expanded from the contracted condition exemplified in figure 2, to the expanded condition exemplified in figure 3.

Simultaneously with the expansion of the forming drum 14 from the contracted condition to the expanded condition, the inserts 23, initially retained in rest position due to the interaction between the central bodies 18 and the cam portions 32, are returned by the respective springs 28 and rotate around the rotation axes Y-Y of the respective pins 26 up to taking on the operative position upon reaching the radially expanded condition of the forming drum 14.

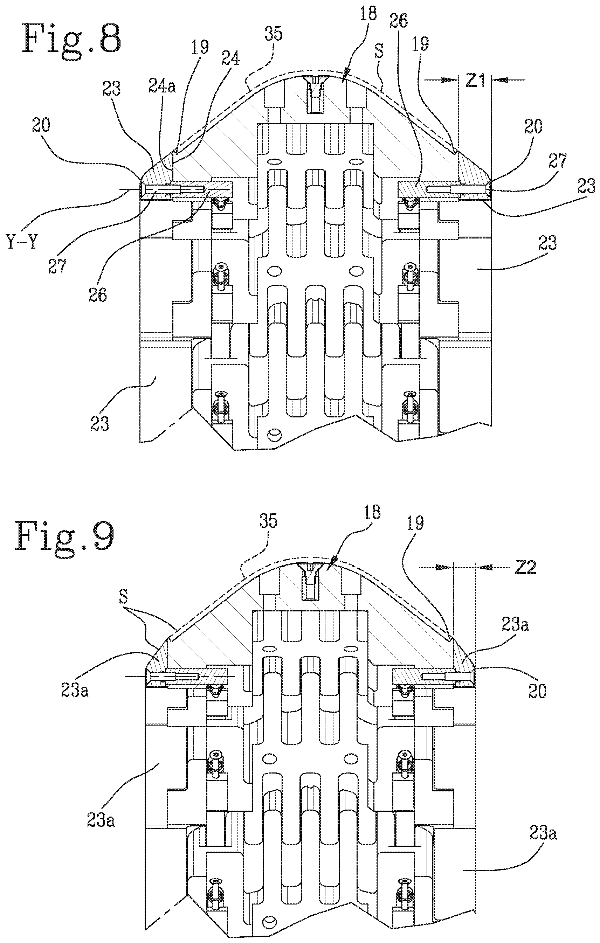

The annular elements 31 formed by the succession of the inserts 23 in the operative position contribute, together with the central bodies 18 of the sectors 16, in order to define the deposition surface S in its entirety. Such deposition surface can be possibly defined, at least at the central bodies 18 of the sectors 16, by an elastic membrane 35 represented in a dashed line in figures 8 and 9, circumferentially extended around the forming drum 14

The forming drum 14 in the expanded condition is adapted to receive the carcass sleeve 12 and/or other components of the tyre 2 being processed, associated with the drum itself by the application devices 15.

The application of several components of the tyre, for example the anchoring annular structures 5, can require the transmission of axial thrust actions, also of considerable impact and/or size, at the axially opposite edges 20 of the forming drum 14. On such matter, the cooperation between the axially inner walls 24 of the inserts 23 and the abutment surfaces 24a carried by the central body 18 of each sector 16 offers a wide contact surface, which is adapted for effectively distributing the stresses induced by the aforesaid axial thrust actions. The application of the components of the tyre 2 can be completed in the shaping station 13. Alternatively, provision can be made such that the forming drum 14 carrying the carcass sleeve 12 and possible other additional components is removed from the shaping station 13 and transferred into one or more additional work stations 33 in order to execute the application of further components, such as the belt structure 7, the tread band 8, the sidewalls 9 and/or other items.

At the end of the building of at least one first tyre 2 being processed, the forming drum 14 is radially contracted in order to facilitate the removal of the same built tyre.

The inserts 23 of the forming drum 14 are easily dismountable from the respective central bodies 18 and substitutable with inserts 23 having different geometric and size characteristics, in order to adapt the forming drum 14 for the processing of tyres 2 having different structural characteristics. For such purpose, it is possible to act on the fixing screws 27 so to be able to remove and substitute the inserts 23. Such operation can be conveniently executed without having to remove the pins 26, the arms and/or the springs 28.

Provision is preferably made such that a same forming drum 14 is coupled with a multiple series of inserts 23. Each series of inserts 23 is separately and selectively engageable with the central bodies 18 of the sectors 16 in order to confer a predetermined geometric shaping to the forming drum 14. In other words, the series of inserts 23 are selectively interchangeable in order to adapt the forming drum 14 to the processing of tyres 2 having different structural characteristics.

With reference to the enclosed drawings, the inserts 23 illustrated in figures 2 to 8 belong to a first series of inserts 23. In the example of figure 9, inserts are illustrated and marked with 23a which belong to a second series, engaged with the central body 18 of a respective sector 16 in place of the inserts 23 belonging to the first series. The inserts belonging to the second series 23a have geometric and size characteristics different from those of the inserts 23 belonging to the first series. More specifically, the inserts of the second series 23a have an axial extension Z2 and/or radial extension different with respect to that of the inserts 23 of the first series. In the illustrated example, the inserts of the second series 23a have an axial extension Z2 smaller than the axial extension Z1 of the inserts 23 of the first series. The engagement of the inserts belonging to the second series 23a in substitution of those of the first series therefore allows easily adapting the geometric and size characteristics of the forming drum 14 to the processing of carcass sleeves 12 in which the extension of the carcass ply/plies 3, in the section comprised between the anchoring annular structures 5, is smaller than that encounterable with the use of the inserts 23 belonging to the first series.

After a first tyre 2, attained for example by employing the inserts 23 belonging to the first series, has been removed from the forming drum 14, the first series of inserts 23 can if necessary be removed from the sectors 16 and substituted with the inserts of the second series 23a, before starting the application of the components of a second tyre 2 having different structural characteristics.

It can be provided to use any number of series of different inserts 23, so as to adapt the flexibility of use of the forming drum 14 to the different production needs. The availability of removable and interchangeable inserts 23 considerably simplifies the management both in operating production step, and in testing step for implementing equipment and design specifications for making new tyre 2 types. The inserts 23 are in fact components which can be made in limited times and with relatively reduced costs. The fact that the inserts 23 can be easily substitutes therefore allows changing upon request, within certain limits, the geometric shaping and sizes of the forming drum 14 in order to adapt it to new production needs or for testing new configurations, with a considerable lowering of times, design and implementation costs.

## Claims

1. Process for building tyres, comprising:
arranging an expandable toroidal forming drum (14), comprising circumferentially consecutive sectors (16) that are radially movable, each comprising a central body (18) and a pair of interchangeable inserts (23), each removably engaged at a respective axial end edge (19) of the central body (18);
expanding the forming drum (14) from a contracted condition in which said sectors (16) are moved close to a geometric rotation axis (X-X) of the forming drum (14), to an expanded condition in which the sectors (16) are radially moved away from said geometric axis (X-X) in order to define a radially outer deposition surface (S) extending between two axially opposite edges (20) of the forming drum (14);
applying, on the deposition surface (S) of the forming drum (14), at least one component of a first tyre (2) being processed;
**characterised in that**,
during the expansion of the forming drum (14), the inserts (23) of each sector (16) are moved with respect to the respective central bodies (18) by rotation around a rotation axis (Y-Y) axially extending through a lying plane of the respective axial end edge (19) of the central body (18), up to an operative position in which said inserts (23) extend each on the continuation of the inserts (23) belonging to the circumferentially adjacent sectors (16), in order to form annular elements (31) extending along the axially opposite edges (20) of the forming drum (14).

2. Process as claimed in claim 1, wherein said inserts (23) form a first series of inserts (23), wherein after the removal of the first tyre (2) being processed, the first series of inserts (23) is removed from the sectors (16) of the forming drum (14) and substituted with inserts belonging to a second series (23a) having size different from the inserts (23) of the first series, before applying, on the deposition surface (S) of the forming drum (14), at least one component of a second tyre (2) being processed.

3. Process as claimed in claim 1 or 2 wherein said inserts (23) are brought to the operative position starting from a rest position in which they extend each transverse to a circumferential direction (C-C) that is concentric with respect to the geometric axis (X-X) of the forming drum (14).

4. Process as claimed in one or more of the preceding claims, wherein each insert (23) is elastically thrust towards the operative position.

5. Process as claimed in one or more of the preceding claims, wherein during the contraction of the forming drum (14), each insert (23) is thrust towards the rest position upon action of a projection (21) belonging to an adjacent sector (16), acting against a cam portion (32) carried by the insert itself.

6. Process as claimed in one or more of the preceding claims, wherein said at least one component is applied by an axial thrust action against the axially opposite edges (20) of the forming drum (14),
wherein each insert (23) has an axially inner wall (24) acting axially in abutment relationship against the central body (18) in order to oppose the axial thrust action transmitted to the forming drum (14) during the application of the component.

7. Apparatus for building tyres for vehicle wheels, comprising:
an expandable toroidal forming drum (14), having a radially outer deposition surface (S) extending between two axially opposite edges (20) of the forming drum (14),
application devices (15) for applying components of a tyre (2) being processed on the deposition surface (S) of the forming drum (14);
wherein said forming drum (14) comprises:
circumferentially consecutive sectors (16) that are radially movable between a contracted condition in which said sectors (16) are moved close to a geometric rotation axis (X-X) of the forming drum (14), and an expanded condition in which the sectors (16) are radially moved away from said geometric axis (X-X) in order to define said deposition surface (S);
wherein each sector (16) comprises a central body (18) and a pair of interchangeable inserts (23), each removably engaged at a respective axial end edge (19) of the central body (18),
**characterised in that**,
each insert (23) is rotatably engaged with the central body (18) by a pin (26) axially extending through the respective axial end edge (19) of the central body (18),
wherein said inserts (23) are movable simultaneously with the expansion of the forming drum (14) from the contracted condition to the expanded condition, up to reaching an operative position in which they are each extending on the continuation of the inserts (23) belonging to the circumferentially adjacent sectors (16), in order to form annular elements (31) extending along the axially opposite edges (20) of the forming drum (14).

8. Apparatus as claimed in claim 7, wherein each sector (16) has a central body (18) carrying circumferentially opposite coupling portions (18a, 18b) each comprising circumferential projections (21) alternated with circumferential cavities (22),
wherein the projections (21) of each sector (16) are slidably engaged in the respective cavities (22) of circumferentially adjacent sectors (16).

9. Apparatus as claimed in claim 7 or 8, wherein each insert (23) is elastically thrust towards the operative position by at least one spring (28) operating between the central body (18) of the respective sector (16) and the insert itself.

10. Apparatus as claimed in claim 9, wherein the spring (28) has one end constrained to an arm (29) radially projecting from the pin (26) in radially inner position at one of said coupling portions (18a, 18b) next to one of the projections (21).

11. Apparatus as claimed in one or more of claims 7 to 10, wherein each insert (23) has an axially inner wall (24) directed towards the central body (18) of the respective sector (16) and acting in abutment relationship against an abutment surface (24a) carried by the central body (18) of the respective sector (16) at the respective axial end edge (19).

12. Apparatus as claimed in claim 11, wherein the axially inner wall (24) of the insert (23) and the abutment surface (24a) slidably mate in a plane orthogonal to the geometric axis (X-X) of the forming drum (14).

13. Apparatus as claimed in one or more of claims 7 to 12, wherein each insert (23) has a curved longitudinal extension between at least two terminal walls (25) that are circumferentially opposite each other,
wherein in the operative position, the terminal walls (25) of each insert (23) each mate with one of the terminal walls (25) of a circumferentially adjacent insert (23),
wherein said terminal walls (25) are arranged according to an extension that is tilted with respect to a radial direction (R) at the geometric axis (X-X) of the forming drum (14).

14. Apparatus as claimed in one or more of claims 7 to 13 wherein each insert (23) has a curved longitudinal extension between at least two terminal walls (25) that are circumferentially opposite each other,
wherein each insert (23) has a cam portion (32) attained in the form of a lateral projection arranged in proximity to one of the circumferentially opposite terminal walls (25) of the insert itself and
configured for interacting against the central body (18) of one of the circumferentially adjacent sectors (16).

15. Apparatus as claimed in claim 14, wherein said cam portion (32) is attained in the form of a lateral projection arranged in proximity to one of the circumferentially opposite terminal walls (25) of the insert (23), in order to interact against one of the projections (21) carried by the sector (16) circumferentially adjacent to that carrying the insert (23) itself.

## Patentansprüche

1. Prozess zur Herstellung von Reifen, umfassend:
Auslegen einer expandierbaren toroidalen Formtrommel (14), die in Umfangsrichtung aufeinanderfolgende Sektoren (16) umfasst, die radial beweglich sind, wobei jeder einen Zentralkörper (18) und ein Paar austauschbarer Einsätze (23) umfasst, die jeweils an einer entsprechenden axialen Endkante (19) des Zentralkörpers (18) entfernbar in Eingriff stehen;
Expandieren der Formtrommel (14) aus einem zusammengezogenen Zustand, in dem die Sektoren (16) nahe einer geometrischen Drehachse (X-X) der Formtrommel (14) bewegt werden, in einen expandierten Zustand, in dem die Sektoren (16) radial von der geometrischen Achse (X-X) weg bewegt werden, um eine radial äußere Ablagefläche (S) zu definieren, die sich zwischen zwei axial gegenüberliegenden Kanten (20) der Formtrommel (14) erstreckt;
Aufbringen mindestens einer Komponente eines ersten Reifens (2), der bearbeitet wird, auf die Ablagefläche (S) der Formtrommel (14);
**dadurch gekennzeichnet, dass**,
während der Expansion der Formtrommel (14) die Einsätze (23) jedes Sektors (16) in Bezug auf die jeweiligen Zentralkörper (18) durch Drehung um eine Drehachse (Y-Y), die sich axial durch eine liegende Ebene der jeweiligen axialen Endkante (19) des Zentralkörpers (18) erstreckt, bewegt werden bis zu einer Betriebsposition, in der sich die Einsätze (23) jeweils in der Verlängerung der zu den in Umfangsrichtung benachbarten Sektoren (16) gehörenden Einsätze (23) erstrecken, um ringförmige Elemente (31) zu bilden, die sich entlang der axial gegenüberliegenden Kanten (20) der Formtrommel (14) erstrecken.

2. Verfahren nach Anspruch 1, wobei die Einsätze (23) eine erste Reihe von Einsätzen (23) bilden, wobei nach der Entfernung des ersten Reifens (2), der bearbeitet wird, die erste Reihe von Einsätzen (23) aus den Sektoren (16) der Formtrommel (14) entfernt und durch Einsätze ersetzt wird, die zu einer zweiten Reihe (23a) gehören, die eine andere Größe als die Einsätze (23) der ersten Reihe haben, bevor mindestens eine Komponente eines zweiten Reifens (2), der bearbeitet wird, auf die Ablagefläche (S) der Formtrommel (14) aufgebracht wird.

3. Verfahren nach Anspruch 1 oder 2, wobei die Einsätze (23) in die Betriebsposition gebracht werden, ausgehend von einer Ruheposition, in der sie sich jeweils quer zu einer Umfangsrichtung (C-C) erstrecken, die konzentrisch zur geometrischen Achse (X-X) der Formtrommel (14) ist.

4. Verfahren nach einem oder mehreren der vorhergehenden Ansprüche, wobei jeder Einsatz (23) elastisch in die Arbeitsposition geschoben wird.

5. Verfahren nach einem oder mehreren der vorhergehenden Ansprüche, wobei während des Zusammenziehens der Formtrommel (14) jeder Einsatz (23) durch die Wirkung eines Vorsprungs (21), der zu einem benachbarten Sektor (16) gehört und gegen einen von dem Einsatz selbst getragenen Nockenabschnitt (32) wirkt, in die Ruhestellung geschoben wird.

6. Verfahren nach einem oder mehreren der vorhergehenden Ansprüche, wobei die mindestens eine Komponente durch eine axiale Schubwirkung gegen die axial gegenüberliegenden Kanten (20) der Formtrommel (14) angelegt wird,
wobei jeder Einsatz (23) eine axial innere Wand (24) aufweist, die axial gegen den Zentralkörper (18) wirkt, um der auf die Formtrommel (14) übertragenen axialen Schubwirkung während des Aufbringens der Komponente entgegenzuwirken.

7. Vorrichtung zur Herstellung von Reifen für Fahrzeugräder, umfassend:
eine expandierbare toroidale Formtrommel (14), die eine radial äußere Ablagefläche (S) aufweist, die sich zwischen zwei axial gegenüberliegenden Kanten (20) der Formtrommel (14) erstreckt,
Aufbringungsvorrichtungen (15) zum Aufbringen von Komponenten eines Reifens (2), der bearbeitet wird, auf die Ablagefläche (S) der Formtrommel (14);
wobei die Formtrommel (14) umfasst:
in Umfangsrichtung aufeinanderfolgende Sektoren (16), die radial zwischen einem zusammengezogenen Zustand, in dem die Sektoren (16) nahe einer geometrischen Drehachse (X-X) der Formtrommel (14) bewegt werden, und einem expandierten Zustand, in dem die Sektoren (16) radial von der geometrischen Achse (X-X) weg bewegt werden, um die Ablagefläche (S) zu definieren, beweglich sind;
wobei jeder Sektor (16) einen Zentralkörper (18) und ein Paar austauschbarer Einsätze (23) umfasst, die jeweils an einer entsprechenden axialen Endkante (19) des Zentralkörpers (18) entfernbar in Eingriff stehen,
**dadurch gekennzeichnet, dass**
jeder Einsatz (23) durch einen Stift (26), der sich axial durch die jeweilige axiale Endkante (19) des Zentralkörpers (18) erstreckt, drehbar mit dem Zentralkörper (18) in Eingriff ist,
wobei die Einsätze (23) gleichzeitig mit der Ausdehnung der Formtrommel (14) aus dem zusammengezogenen Zustand in den expandierten Zustand bewegbar sind, bis zum Erreichen einer Betriebsposition, in der sie sich jeweils in der Verlängerung der Einsätze (23) erstrecken, die zu den in Umfangsrichtung benachbarten Sektoren (16) gehören, um ringförmige Elemente (31) zu bilden, die sich entlang der axial gegenüberliegenden Kanten (20) der Formtrommel (14) erstrecken.

8. Vorrichtung nach Anspruch 7, wobei jeder Sektor (16) einen Zentralkörper (18) aufweist, der in Umfangsrichtung gegenüberliegende Kupplungsabschnitte (18a, 18b) trägt, die jeweils in Umfangsrichtung verlaufende Vorsprünge (21) umfassen, die sich mit in Umfangsrichtung verlaufenden Hohlräumen (22) abwechseln,
wobei die Vorsprünge (21) eines jeden Sektors (16) gleitend in die jeweiligen Hohlräume (22) von in Umfangsrichtung benachbarten Sektoren (16) eingreifen.

9. Vorrichtung nach Anspruch 7 oder 8, wobei jeder Einsatz (23) durch mindestens eine Feder (28), die zwischen dem Zentralkörper (18) des jeweiligen Sektors (16) und dem Einsatz selbst wirkt, elastisch in Richtung der Betriebsposition geschoben wird.

10. Vorrichtung nach Anspruch 9, wobei die Feder (28) mit einem Ende an einem Arm (29) befestigt ist, der radial vom Stift (26) in einer radial inneren Position an einem der Kupplungsabschnitte (18a, 18b) neben einem der Vorsprünge (21) vorsteht.

11. Vorrichtung nach einem oder mehreren der Ansprüche 7 bis 10, wobei jeder Einsatz (23) eine axial innere Wand (24) aufweist, die auf den Zentralkörper (18) des jeweiligen Sektors (16) gerichtet ist und an der jeweiligen axialen Endkante (19) gegen eine vom Zentralkörper (18) des jeweiligen Sektors (16) getragene Anschlagfläche (24a) wirkt.

12. Vorrichtung nach Anspruch 11, wobei die axial innere Wand (24) des Einsatzes (23) und die Anschlagfläche (24a) in einer Ebene orthogonal zur geometrischen Achse (X-X) der Formtrommel (14) gleitend zusammenpassen.

13. Vorrichtung nach einem oder mehreren der Ansprüche 7 bis 12, wobei jeder Einsatz (23) eine gekrümmte Längserstreckung zwischen mindestens zwei Endwänden (25) aufweist, die einander in Umfangsrichtung gegenüberliegen,
wobei in der Betriebsposition die Endwände (25) jedes Einsatzes (23) jeweils mit einer der Endwände (25) eines in Umfangsrichtung benachbarten Einsatzes (23) zusammenpassen,
wobei die Endwände (25) entsprechend einer Verlängerung ausgelegt sind, die in Bezug auf eine radiale Richtung (R) an der geometrischen Achse (X-X) der Formtrommel (14) geneigt ist.

14. Vorrichtung nach einem oder mehreren der Ansprüche 7 bis 13, wobei jeder Einsatz (23) eine gekrümmte Längserstreckung zwischen mindestens zwei Endwänden (25) aufweist, die einander in Umfangsrichtung gegenüberliegen,
wobei jeder Einsatz (23) einen Nockenabschnitt (32) in Form eines seitlichen Vorsprungs aufweist, der in der Nähe einer der in Umfangsrichtung gegenüberliegenden Abschlusswände (25) des Einsatzes selbst ausgelegt ist und
dafür konfiguriert ist, gegen den Zentralkörper (18) eines der in Umfangsrichtung benachbarten Sektoren (16) zu wirken.

15. Vorrichtung nach Ansprüch 14, wobei der Nockenabschnitt (32) in Form eines seitlichen Vorsprungs ausgeführt ist, der in der Nähe einer der in Umfangsrichtung gegenüberliegenden Endwände (25) des Einsatzes (23) ausgelegt ist, um mit einem der Vorsprünge (21) zusammenzuwirken, die von dem Sektor (16) getragen werden, der in Umfangsrichtung an denjenigen angrenzt, der den Einsatz (23) selbst trägt.

## Revendications

1. Procédé de construction de pneus, comprenant :
l'agencement d'un tambour de formation toroïdal extensible (14), comprenant des secteurs circonférentiellement consécutifs (16) qui sont mobiles radialement, comprenant chacun un corps central (18) et une paire d'inserts interchangeables (23), chacun engagé de manière amovible au niveau d'un bord d'extrémité axial respectif (19) du corps central (18) ;
l'expansion du tambour de formation (14) depuis un état contracté dans lequel lesdits secteurs (16) sont déplacés à proximité d'un axe de rotation géométrique (X-X) du tambour de formation (14), jusqu'à un état déployé dans lequel les secteurs (16) sont radialement éloigné dudit axe géométrique (X-X) afin de définir une surface de dépôt radialement externe (S) s'étendant entre deux bords axialement opposés (20) du tambour de formation (14) ;
l'application, sur la surface de dépôt (S) du tambour de formation (14), d'au moins un composant d'un premier pneu (2) en cours de traitement ;
**caractérisé en ce que**,
lors de l'expansion du tambour de formation (14), les inserts (23) de chaque secteur (16) sont déplacés par rapport aux corps centraux respectifs (18) par rotation autour d'un axe de rotation (Y-Y) s'étendant axialement à travers un plan de couchage du bord d'extrémité axiale respectif (19) du corps central (18), jusqu'à une position opérationnelle dans laquelle lesdits inserts (23) s'étendent chacun sur le prolongement des inserts (23) appartenant aux secteurs circonférentiellement adjacents (16), afin de former des éléments annulaires (31) s'étendant le long des bords axialement opposés (20) du tambour de formation (14).

2. Procédé selon la revendication 1, dans lequel lesdits inserts (23) forment une première série d'inserts (23), dans lequel après le retrait du premier pneu (2) en cours de traitement, la première série d'inserts (23) est retirée des secteurs (16) du tambour de formation (14) et substituée par des inserts appartenant à une deuxième série (23a) de taille différente des inserts (23) de la première série, avant l'application, sur la surface de dépôt (S) du tambour de formation (14), au moins un composant d'un deuxième pneu (2) étant traité.

3. Procédé selon la revendication 1 ou 2, dans lequel lesdits inserts (23) sont amenés en position opérationnelle à partir d'une position de repos dans laquelle ils s'étendent chacun transversalement à une direction circonférentielle (C-C) concentrique par rapport à l'axe géométrique (X-X) du tambour de formation (14).

4. Procédé selon une ou plusieurs des revendications précédentes, dans lequel chaque insert (23) est poussé élastiquement vers la position opérationnelle.

5. Procédé selon l'une ou plusieurs des revendications précédentes, **caractérisé en ce que** lors de la contraction du tambour de formation (14), chaque insert (23) est poussé vers la position de repos sous l'action d'une saillie (21) appartenant à un secteur adjacent (16), agissant contre une partie de came (32) portée par l'insert lui-même.

6. Procédé selon une ou plusieurs des revendications précédentes, dans lequel ledit au moins un composant est appliqué par une action de poussée axiale contre les bords axialement opposés (20) du tambour de formation (14),
dans lequel chaque insert (23) présente une paroi axialement interne (24) agissant axialement en relation de butée contre le corps central (18) afin de s'opposer à l'action de poussée axiale transmise au tambour de formation (14) lors de l'application du composant.

7. Appareil de construction de pneus pour roues de véhicules, comprenant :
un tambour de formation toroïdal extensible (14), ayant une surface de dépôt radialement externe (S) s'étendant entre deux bords axialement opposés (20) du tambour de formation (14),
des dispositifs d'application (15) pour appliquer des composants d'un pneu (2) en cours de traitement sur la surface de dépôt (S) du tambour de formation (14) ;
dans lequel ledit tambour de formation (14) comprend :
des secteurs circonférentiellement consécutifs (16) qui sont mobiles radialement entre un état contracté dans lequel lesdits secteurs (16) sont déplacés à proximité d'un axe de rotation géométrique (X-X) du tambour de formation (14), et un état déployé dans lequel les secteurs (16) sont radialement éloignés dudit axe géométrique (X-X) pour définir ladite surface de dépôt (S) ;
dans lequel chaque secteur (16) comprend un corps central (18) et une paire d'inserts interchangeables (23), chacun engagé de manière amovible au niveau d'un bord d'extrémité axiale respectif (19) du corps central (18),
**caractérisé en ce que**,
chaque insert (23) est en prise rotative avec le corps central (18) par une broche (26) s'étendant axialement à travers le bord d'extrémité axial respectif (19) du corps central (18),
dans lequel lesdits inserts (23) sont mobiles simultanément à l'expansion du tambour de formation (14) depuis l'état contracté jusqu'à l'état déployé, jusqu'à atteindre une position opérationnelle dans laquelle ils s'étendent chacun dans le prolongement des inserts (23) appartenant aux secteurs circonférentiellement adjacents (16), afin de former des éléments annulaires (31) s'étendant le long des bords axialement opposés (20) du tambour de formation (14).

8. Appareil selon la revendication 7, dans lequel chaque secteur (16) comporte un corps central (18) portant des parties de couplage circonférentiellement opposées (18a, 18b) comprenant chacune des saillies circonférentielles (21) alternées avec des cavités circonférentielles (22),
dans lequel les saillies (21) de chaque secteur (16) sont engagées de manière coulissante dans les cavités respectives (22) de secteurs circonférentiellement adjacents (16).

9. Appareil selon la revendication 7 ou 8, dans lequel chaque insert (23) est poussé élastiquement vers la position opérationnelle par au moins un ressort (28) agissant entre le corps central (18) du secteur respectif (16) et l'insert lui-même.

10. Appareil selon la revendication 9, dans lequel le ressort (28) a une extrémité contrainte à un bras (29) faisant saillie radialement depuis la broche (26) en position radialement intérieure au niveau de l'une desdites parties de couplage (18a, 18b) à côté de une des saillies (21).

11. Appareil selon une ou plusieurs des revendications 7 à 10, dans lequel chaque insert (23) présente une paroi axialement interne (24) dirigée vers le corps central (18) du secteur respectif (16) et agissant en relation de butée contre une surface de butée (24a) portée par le corps central (18) du secteur respectif (16) au niveau du bord d'extrémité axiale respectif (19).

12. Appareil selon la revendication 11, dans lequel la paroi axialement intérieure (24) de l'insert (23) et la surface de butée (24a) s'accouplent de manière coulissante dans un plan orthogonal à l'axe géométrique (X-X) du tambour de formation (14).

13. Appareil selon une ou plusieurs des revendications 7 à 12, dans lequel chaque insert (23) a une extension longitudinale incurvée entre au moins deux parois terminales (25) qui sont circonférentiellement opposées l'une à l'autre,
dans lequel, dans la position opérationnelle, les parois terminales (25) de chaque insert (23) s'accouplent chacune avec l'une des parois terminales (25) d'un insert circonférentiellement adjacent (23),
dans lequel lesdites parois terminales (25) sont disposées selon une extension qui est inclinée par rapport à une direction radiale (R) au niveau de l'axe géométrique (X-X) du tambour de formation (14).

14. Appareil selon une ou plusieurs des revendications 7 à 13, dans lequel chaque insert (23) a une extension longitudinale incurvée entre au moins deux parois terminales (25) qui sont circonférentiellement opposées l'une à l'autre,
dans lequel chaque insert (23) comporte une partie de came (32) réalisée sous la forme d'une saillie latérale disposée à proximité de l'une des parois terminales circonférentiellement opposées (25) de l'insert lui-même et
configuré pour interagir contre le corps central (18) de l'un des secteurs circonférentiellement adjacents (16).

15. Appareil selon la revendication 14, dans lequel ladite partie de came (32) est atteinte sous la forme d'une saillie latérale disposée à proximité de l'une des parois terminales circonférentiellement opposées (25) de l'insert (23), afin d'interagir contre l'une des saillies (21) portées par le secteur (16) circonférentiellement adjacent à celui portant l'insert (23) lui-même.
